# EUROPEAN PATENT SPECIFICATION

(11) **EP 3 133 904 B1**
(45) Date of publication and mention of the grant of the patent: **14.03.2018**
(21) Application number: 16184535.9
(22) Date of filing: 17.08.2016
(51) Int. Cl.: H05B 37/02

(54) **TRANSMITTING LOGICAL DALI SIGNALS WIRELESSLY**
DRAHTLOSE ÜBERTRAGUNG VON LOGISCHEN DALI-SIGNALEN
TRANSMISSION SANS FIL DE SIGNAUX DALI LOGIQUES

(30) Priority: 20.08.2015 EP 15181675
(43) Date of publication of application: 22.02.2017
(73) Proprietor: Philips Lighting Holding B.V., 5656 AE Eindhoven (NL)
(72) Inventor: NIEUWLANDS, Eric, Johannus, Hendricus, Cornelis, Maria, 5656 AE Eindhoven (NL)
(74) Representative: Verweij, Petronella Daniëlle

(56) References cited:
- US-A1- 2010 329 364
- US-A1- 2015 076 994

## Description

### FIELD OF THE INVENTION

The present invention generally relates to a system, a transmitter and a receiver for transmitting a logical Digital Addressable Lighting Interface (DALI) signal wirelessly.

### BACKGROUND

DALI, which stands for Digital Addressable Lighting Interface, is a global standard for lighting control communications. It supports many types of lamps, control sensors and control devices. In general, DALI signals are used by control devices to control DALI hardware, also referred to as control gear. Moreover, DALI is applicable to a wide variety of lighting applications. DALI provides in the control, configuration and monitoring of devices. For example, DALI can be used with dimmable drivers, presence and daylight sensors to dim lamps when they are redundant hereby enabling energy savings.

Conventionally, DALI signals are transmitted over wires. However, state of the art lighting systems tend to rely more and more on wireless control and the flexibility this brings. Therefore, there is a wireless extension for DALI that enables the transmission of DALI over radio frequencies.

In outdoor environments, it is necessary to shield luminaires from the environment. Additionally, it might be desirable to have a modular design in an outside lighting device for easy replacement of parts of the lighting device or for the addition of features to the lighting devices. An example of such a lighting device is shown in patent application CN 103867971. A disadvantage of the device in the patent application is the processing power needed to transmit the wireless DALI signal. The present invention addresses this problem. US Patent Application Publication US 2015 / 0076994 A1 discloses a DALI isolated interface according to the preamble of claim 1.

### SUMMARY OF THE INVENTION

It is an object of the invention to provide a system, a transceiver and a receiver for transmitting a logical Digital Addressable Lighting Interface (DALI) signal wirelessly.

According to a first aspect of the invention the object is achieved by a system for transmitting a logical Digital Addressable Lighting Interface (DALI) signal wirelessly, comprising a transmitter (300) and a receiver (302), the transmitter (300) comprising a first coil (310) inductively coupled to a second coil (314); and a first conversion module (306) arranged to receive a logical DALI signal, said first conversion module comprising a first amplifier (307) arranged to amplify the logical DALI signal so as to generate a drive current for the first coil (310) to generate an induction signal in the second coil (314); the receiver (302) comprising the second coil (314) inductively coupled to the first coil (310) arranged to receive the induction signal; a second conversion module (318) coupled to the second coil (314) arranged to convert the received induction signal into a reconstructed logical DALI signal, which second conversion module (318) comprises a bit reconstruction module (309) arranged to convert the induction signal into the reconstructed logical DALI signal.

The system is advantageous as it does not need processing power to transmit a wireless DALI signal. This makes it easier and cheaper to fabricate wireless DALI devices. The inventor has realized that the DALI signal, due to its low frequency and the fact that it uses Manchester encoding (which ensures an alternating current), can be transmitted directly from one coil to another coil using electromagnetic induction. This substantially reduces the processing requirements compared to CN 103867971.

In an embodiment of the system, the receiver is coupled to DALI hardware for processing DALI signals and the receiver is configured to drive the DALI hardware using the reconstructed logical DALI signal.

It is advantageous to use the transmitted DALI signal to control DALI hardware. Controlling hardware based on a DALI signal transmitted over coils allows the control over shielded systems as shown in patent application CN 103867971. What is not mentioned in said patent application is that this also allows a modular design. Extra features can be added to a lighting device. For example, instead of only being able to turn a lamp on and off a dimmable feature may be introduced. Also, sensors can control the DALI hardware via such a modular design. This allows a user to add extra features to a basic product.

In an embodiment of the system the second conversion module further comprises a noise filtering module configured to filter noise from the induction signal and transmit a filtered signal to the bit reconstruction module.

Depending on the quality of the coils and the quality of their installment, the signal might be very clear or quite noisy. In the latter case, it is advantageous to filter the noise such that a clean signal is sent to the bit reconstruction module.

In an embodiment of the system the second conversion module further comprises a second amplifier configured to amplify the induction signal and transmit an amplified induction signal to the noise filtering module.

When the coils are placed at a large distance from each other, the housing protecting the coils is very thick or when the drive current is rather low it is it advantageous to amplify the received induction signal before sending it to the noise filtering module. In this way, the noise can be filtered out more easily such that the performance of the system will increase.

In an embodiment of the system the transmitter is configured to transmit a logical DALI signal a plurality of times.

DALI contains no parity check or other form of checksum to check whether data is properly received. Therefore, it is recommended to send logical DALI signal a plurality of time for verification. The signal can be sent periodically for example once every second. Additionally, this will prevent missing frames. Preferably, the periodic transmissions are independent of the state of the DALI hardware controlled by the logical DALI signal.

In an embodiment of the system the noise filtering module comprises a band pass filter.

In an embodiment of the system the noise filtering module comprises a low-pass filter.

As the transport is a pure analogue connection, there is no need for re-timing of the bits. Only compensation for the level and correcting for filtering of the channel by reconstructing the edges of the bits is necessary. Therefore, it is advantageous to have a low-pass filter or band pass filter.

In an embodiment of the system the bit reconstruction module is configured to use a voltage threshold value to determine a bit sequence of the reconstructed DALI signal from a received signal.

In Manchester encoding, used for the DALI signal, a bit is characterized by a rising or falling edge. Therefore, it is advantageous to use a voltage threshold value to determine the bit sequence from the received signal.

In an embodiment of the system the bit reconstruction module is configured to detect rising and falling edges in the received signal and to use these edges to determine a bit length and wherein the bit reconstruction module is configured to implement corrections to obtain correct and equal bit-lengths.

In Manchester encoding, used for the DALI signal, a bit is characterized by a rising or falling edge. The time difference between the falling or rising edges is fixed. Therefore, it is advantageous to use this information to correct for the timing of the bits.

In an embodiment of the system wherein the receiver (302) is placed in a luminaire comprising a light generation module (708), a driver for controlling the light generation module and a power supply for powering the light generation module, the driver and the receiver, wherein the receiver (302) is configured to send the reconstructed logical DALI signal to the driver, and wherein the driver is configured to control the light generation module based on the reconstructed logical DALI signal sent by the receiver and wherein the transmitter is placed in an add-on module inductively coupled to the luminaire for powering the transmitter.

DALI is meant to control lighting devices therefore it is advantageous to use the system in combination with luminaires. Note that the power supply is the device delivering the power to the light generation module but does not have to be the origin of the power. The power supply device can for example be a coil inductively coupled to another coil from which it receives the power is delivers to the light generation module.

According to a second aspect of the invention the object is achieved by a transmitter comprising:
- a first coil (310) arranged to be inductively coupled to a second coil (314); and
- a first conversion module (306) arranged to receive a logical DALI signal, said first conversion module comprising a first amplifier (307) arranged to amplify the logical DALI signal so as to generate a drive current for the first coil (310) to generate an induction signal in the second coil.

In an embodiment of the transmitter, the transmitter is configured to transmit a logical DALI signal a plurality of times.
According to a third aspect of the invention the object is achieved by a receiver comprising:
- a second coil (314) arranged to be inductively coupled to a first coil that is arranged to transmit a logical Digital Addressable Lighting Interface (DALI) signal by generating an induction signal in the second coil (314);
- a second conversion module (318) coupled to the second coil arranged to convert the received induction signal into a reconstructed logical DALI signal, which second conversion module comprises a bit reconstruction module (309) arranged to convert the induction signal into the reconstructed logical DALI signal.

In an embodiment of the receiver, the second conversion module further comprises a noise filtering module configured to filter noise from the induction signal and transmit a filtered signal to the bit reconstruction module.

In an embodiment of the receiver, the second conversion module further comprises a second amplifier configured to amplify the induction signal and transmit an amplified induction signal to the noise filtering module.

### BRIEF DESCRIPTION OF THE DRAWINGS

The above, as well as additional objects, features and advantages of the disclosed system, transmitter and receiver, will be better understood through the following illustrative and non-limiting detailed description of embodiments, with reference to the appended drawings Fig. 1 to 7.
Fig. 1A schematically shows Manchester encoding for a binary "0" and a binary "1".
Fig. 1B schematically shows a forward frame packet in DALI.
Fig. 1C schematically shows a backward frame packet in DALI.
Fig. 2 is a schematic overview of an embodiment according to the prior art.
Fig. 3 schematically shows the system, the transmitter and the receiver.
Fig. 4A-B schematically show embodiments of the second conversion module.
Fig. 5 is a schematic illustration of a sticker type coil.
Fig. 6 schematically shows how communication between DALI hardware and the control device can be achieved using the present invention.
Fig. 7 schematically shows an outdoor luminaire in which the present invention is applied.

All the figures are schematic, not necessarily to scale, and generally only show parts which are necessary in order to elucidate the invention, wherein other parts may be omitted or merely suggested.

### DESCRIPTION

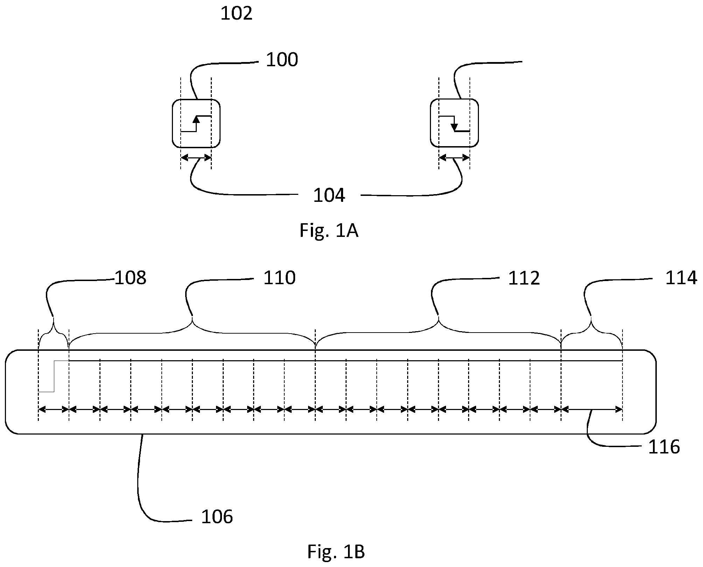

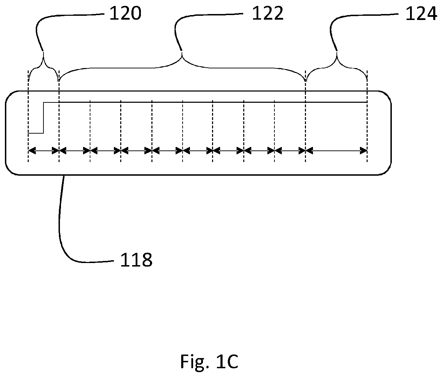

DALI is a global standard for lighting control communications. DALI signals are signals used to transmit DALI data from a control device to control gear. Examples of control gear are luminaires, sensors and dimmers. In this patent application, the logical DALI signal is defined as the signal sent to communicate between the control device and the control gear. Forward frames of the logical DALI signal, sent by the control device to the control gear, are shown in Fig. 1B and backward frames, sent by the control gear to the control device, are shown in Fig. 1C.

The DALI data is sent by logical DALI signals that are encoded using Manchester encoding. Manchester encoding, as shown in Fig. 1A, uses a rising edge 100, low followed by high, to represent a (binary) "0". A falling edge 102, high followed by low, represents a (binary) "1".

For logical DALI signals, the bit-time 104 is referred to as 2 Te in DALI and is 833.33 µs ± 10%. Every Te (half-bit time) thus lies within the range 374.99 µs to 483.33 µs. The low level in the logical DALI signal is defined as 0 ± 4.5V and the high level is defined as 16 ± 6.5V. The maximum current, for one device receiving a logical DALI signal, is defined as 2 mA.

A forward frame 106, shown in Fig. 1B, is the packet sent by the control device to the control gear. It consist of one start bit 108 which is a logical one. Subsequently, eight address bits 110 and eight data bits 112 are sent. The forward frame is closed by two stop bits 114. As is shown in the figure, the stop bits consist of an idle line and have a combine length of 4 Te 116. A typical command that can be sent is the dim level of a luminaire.

A backward frame 118, shown in Fig. 1C, is the response packet sent by the control gear back to the control device. It comprises one start bit 120, eight address bits 122 and two stop bits 124.

Both the forward frame and the backward frame send the most significant bit first. The time between forward frames is at least 22 Te. The time between a forward frame and a backward frame is larger than 7 Te and smaller than 22 Te and the time between a backward frame and a forward frame is at least 22 Te.

It is advantageous in outdoor applications to send DALI signals using inductively coupled coils. In this way the control device and controlled gear can be separated from each other which allows a modular design and allows easy replacement of either the control device or the controlled gear.

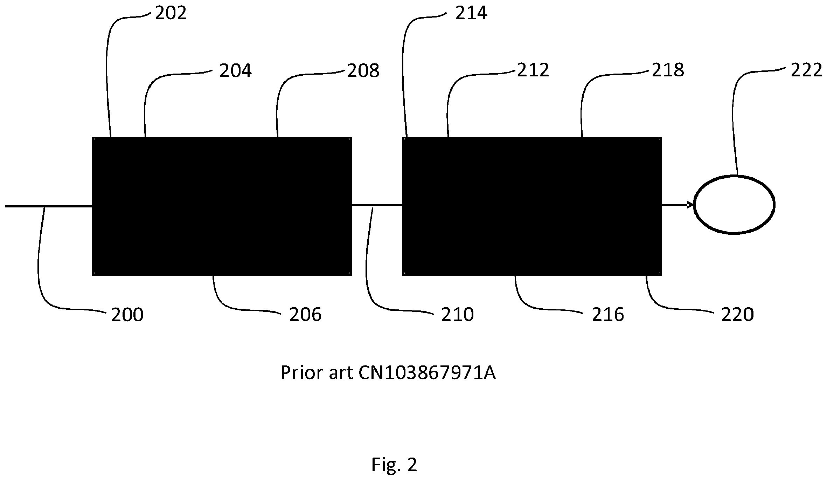

In patent application CN 103867971 such a system is described. Fig. 2 schematically shows such prior art system. A logical DALI signal 200 is sent to a transmitter 202. It is sent to a first processing unit 204 which transforms the signal so as to create a driving signal 206 for a first coil 208. The first coil is inductively coupled 210 to a second coil 212 which resides in a receiver 214. The second coil receives an induction signal as an induction current and sends this induction signal 216 to a second processing unit 218. The second processing unit 218 transforms this induction signal into a reconstructed DALI signal 220 which it sends to the DALI hardware 222 to control said hardware.

The first and second processing unit make the receiver and transmitter expensive and complicated to make which is not convenient for a modular design or easily replaceable control gear. The present invention addresses this problem as the logical DALI signal sent by the control gear is not processed but only amplified to use as input to the coil directly.

The invention makes use of the inventive realization that due to the fact that a logical DALI signal, due to its Manchester encoding, always comprises an alternating current and that due to the frequency of the logical DALI signal, the logical DALI signal can be transmitted directly over a coil-based inductive link.

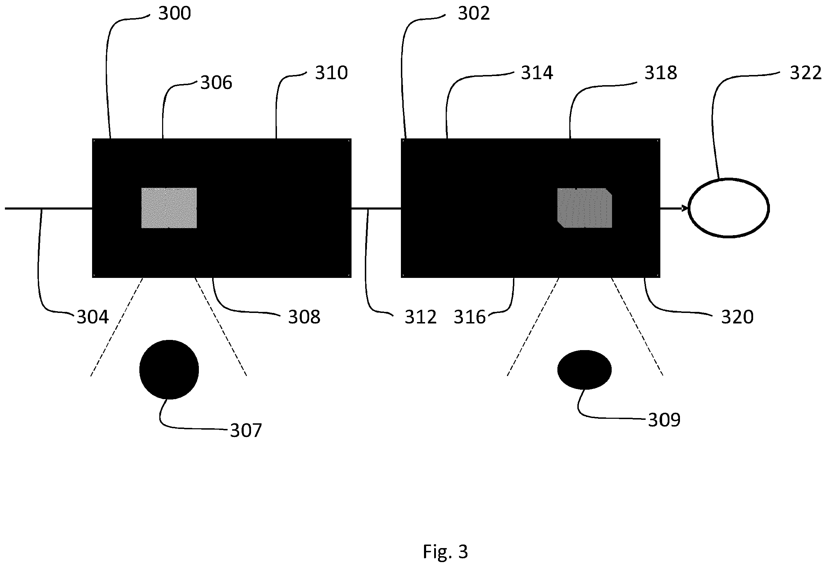

The invention, as shown in Fig. 3, proposes a system comprising a transmitter 300 and a receiver 302. The logical DALI signal 304 is sent to the transmitter. The transmitter 300 comprises a first conversion module 306 that comprises and amplifier 307 which amplifies the DALI signal as to generate a drive current 308. The amount of amplification depends on the coils that are used. Typically, the drive current will lie around 1A. As the logical DALI signal has a maximum current of 2 mA, for one device, this means that the current will be amplified with a factor of 500. More or less current can be used depending on the coils. It might be necessary to change the voltage levels of the signal that is transmitted in order to satisfy the maximum power conditions set by the coils used.

The drive current 308 is sent to the first coil 310 which is inductively coupled 312 to a second coil 314 and generates an induction signal 316 in the second coil. The induction signal is the induction current generated in the second coil. The induction signal is sent to a second conversion module 318 that converts the induction signal into a reconstructed DALI signal 320 that can be used to control the control gear, the DALI hardware 322.

The second conversion module 318 comprises bit reconstruction module 309 that will take care of aligning the received induction current with the DALI specification. Depending on the received current this can mean reducing or increasing either the current or the voltage. DALI timing has considerable tolerance such that it is not always necessary to correct the timing in the bit reconstruction module. Therefore, the bit reconstruction module will generally only comprise simple electronics.

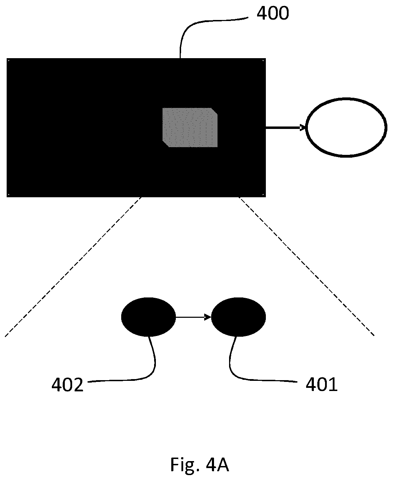

An embodiment of the system is shown in Fig. 4A. In this embodiment the second conversion module comprises a noise filtering module 402 that filters the received induction signal before sending it to the bit reconstruction module 401. Transmitting the DALI signal over coils will result in noise added to the DALI signal. This does not have to be detrimental to the performance as messages will be conveyed correctly as long as the transitions from the low to the high level and vice versa are clear. It could however happen that in these transitions noise is added such that it is not clear for the DALI gear anymore if a received bit is a "1" or a "0". In this case it is advantageous to have a noise filtering module that can filter the noise the signal acquires during the transition. The components used in the noise filtering module will depend on the noise that a signal acquires and thus on the coils, the distance in between the coils, the housing in which the coils are placed, the environment and the driving current used.

In general, when filtering, the DALI signal needs to be retained. Therefore, it is good to only filter frequencies that are at least a factor of two higher than from the DALI working frequencies. A low-pass filter that has its -3dB point at 8 kHz is suitable. Especially, in combination with a high pas filter that has its -3dB point at 500 Hz. This can also be achieved by using a band-pass filter.

The filters can be implemented by, but are not limited to, RC filters, LC filters, Op-amp based filters, Chebyshev filters, Bessel filters, Butterworth filters or Elliptic filters.

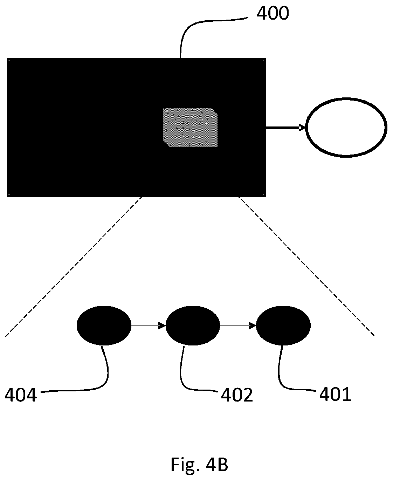

A further embodiment of the system is shown in Fig. 4B. In this embodiment an amplifier 404 is added to the second conversion module. This amplifier amplifies the received induction signal before sending it to the noise filtering module 402. This enables better noise filtering and a better signal to noise ratio. The amplifier can be both a voltage or a current amplifier or a combination of the two. The amplifier 404 can be implemented as an Op-Amp but other implementations are possible as well.

The bit reconstruction module 401 can be implemented using a voltage threshold value to determine the bit sequence of the reconstructed DALI signal. Every time the signal passes this threshold value the bit reconstruction module knows there should be a rising or falling edge. In another implementation the bit reconstruction module is configured to detect rising and falling edges. As these edges determine the bit length, the bit reconstruction module can use these edges to correct the timing of the reconstructed signal. Additionally, as the low and high levels are captured in the DALI specification it can configure the low and high level. The bit reconstruction can for example be implemented by using a basic hysteric comparator. Due to filter choices and coil paths there could be a difference in the up-going and down-going curves therefore the hysteric points or threshold values need to be selected such that the reconstructed bits have the correct bit-time. The bit reconstruction module can also be implemented by oversampling the received signal and reconstructing the signal based on the samples of the received signal and the requirements a DALI signal has to fulfill.

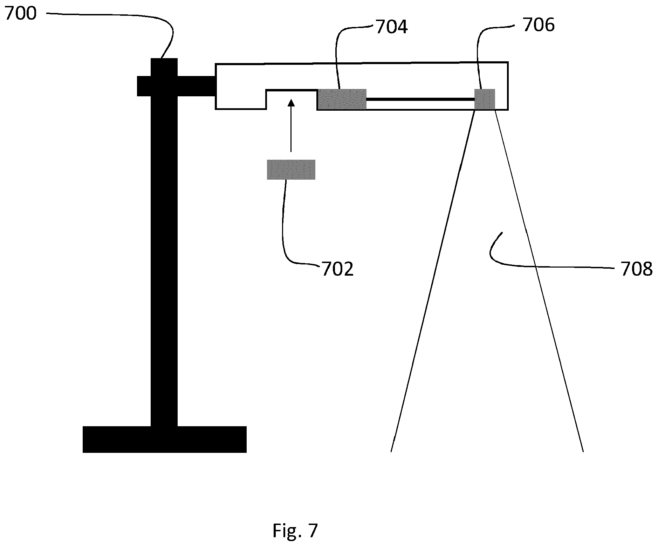

An exemplary embodiment of the system is an outdoor luminaire 700 as shown in Fig. 7. There, it can be advantageous to have a cheap, easy to fabricate basic luminaire that is upgradeable with extra features later. This asks for a modular design and can be achieved with the present invention. The invention enables sensors that can control the luminaire using the communication link of the invention to be added later on. For example, a presence sensor that enables the luminaire to only turn on when people, cars or bikes are present, can be added to save energy.

This sensor module can generate the DALI control signal which is sent to the luminaire, the control gear in this case. The receiver will then be placed in a luminaire that comprises a driver for controlling a light generation module and a power supply for powering the light generation module. The receiver will send the logical DALI signal to the driver which will control the light generation module based on the logical DALI signal sent by the receiver and generated by the sensor.

It is important that the housing of the coils is made from a material that does not block electromagnetic radiation such that good inductive coupling between the first and second coil is possible. Plastics are a good example of such products. Also, a window, at least the size of the coil of a material that does not block electromagnetic radiation could be used.

The transmitter and receiver could be housed in an electromagnetic radiation blocking housing such as a housing made out of aluminum or other metals. This is advantageous as a Faraday-cage is created that will limit noise levels.

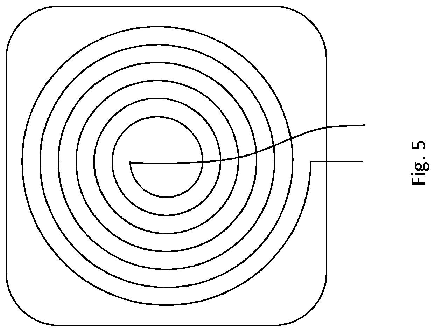

A sticker type coil as shown in Fig. 5 can be used for this application. This has the advantage that the coil is fixed tightly to the housing and thus that the coils can be aligned very well. Coils with an inductance of 24 mH and an inductance tolerance of ±10% are sufficient. However, other coils could be used as well. The size of the coil determines the maximum power transfer. The distance in between coils could be up to a few centimeters. However, for a good performance it is advantageous to place the coils not further apart than 1 cm. Typically, distances between the coils of 5-10 mm yield good results.

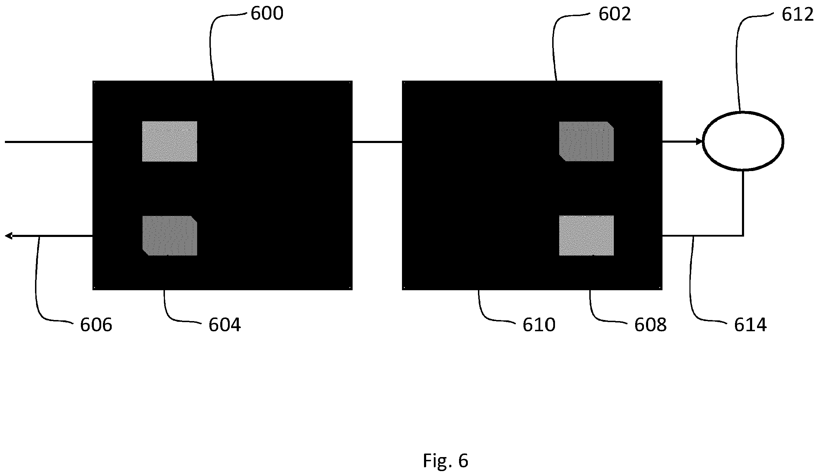

It is also possible to use the present invention to provide communication between the control gear and the control device. In that case, the control gear and the control device both need the elements of the transmitter and the receiver. This is schematically shown in Fig. 6. A first transceiver 600, related to the control device, is shown as well as a second transceiver 602, related to the control gear. The first transceiver comprises the transmitter, as shown in Fig. 3, with an additional second conversion module 604 for generating a reconstructed DALI signal 606. The second transceiver 602, comprises the receiver, as shown in Fig. 3, and an additional first conversion module 608 for generating a drive current 610 for the second coil. The transceivers work as described above for the transmitter and receiver. The control gear, the DALI hardware, 612 should now be able to generate a DALI signal 614. The control gear will typically send a message as a response to a request for data from the control device. Typical data requests are: request dim level, request power usage, request lifetime.

In Fig. 7. it is shown how the invention can be implemented in an outdoor luminaire 700. The module comprising the transmitter 702 can be placed in a cavity the housing of the luminaire. In this way, the transmitter is coupled the receiver 704. The receiver is coupled to a light generation module706 for providing light 708. An advantage of placing the module comprising the transmitter in a cavity of the housing of the luminaire is that it enables good alignment, and therefore coupling, between the first and second coil. Additionally, only one side of the module needs to be made weather proof. Therefore, only thin plastic walls will shield the first and second coil allowing good coupling.

The term "luminaire" is used herein to refer to an implementation or arrangement of one or more light emitters in a particular form factor, assembly, or package. The term "light generation module" is used herein to refer to an apparatus including one or more light sources of same or different types. A given light generation module may have any one of a variety of mounting arrangements for the light source(s), enclosure/housing arrangements and shapes, and/or electrical and mechanical connection configurations. Additionally, a given light generation module optionally may be associated with (e.g., include, be coupled to and/or packaged together with) various other components (e.g., control circuitry) relating to the operation of the light source(s).

The term "light generation module" should be understood to refer to any one or more of a variety of radiation sources, including, but not limited to, LED-based sources (including one or more LEDs as defined below), fluorescent sources, phosphorescent sources, high-intensity discharge sources (e.g., sodium vapor, mercury vapor, and metal halide lamps), lasers, other types of electroluminescent sources, pyro-luminescent sources, luminescent polymers, capable of emitting a light source unique signature such as, but not limited to, spectral and temporal signatures.

It should also be understood that the term LED does not limit the physical and/or electrical package type of an LED. For example, as discussed above, an LED may refer to a single light emitting device having multiple dies that are configured to respectively emit different spectra of radiation (e.g., that may or may not be individually controllable). Also, an LED may be associated with a phosphor that is considered as an integral part of the LED (e.g., some types of white LEDs). In general, the term LED may refer to packaged LEDs, non-packaged LEDs, surface mount LEDs, chip-on-board LEDs, T-package mount LEDs, radial package LEDs, power package LEDs, LEDs including some type of encasement and/or optical element (e.g., a diffusing lens), etc.

A given light generation module may be configured to generate electromagnetic radiation within the visible spectrum, outside the visible spectrum, or a combination of both. Hence, the terms "light" and "radiation" are used interchangeably herein. Additionally, a light emitting module may include as an integral component one or more filters (e.g., color filters), lenses, or other optical components. Also, it should be understood that light emitting modules may be configured for a variety of applications, including, but not limited to, indication, display, and/or illumination.

## Claims

1. A system for transmitting a logical Digital Addressable Lighting Interface (DALI) signal wirelessly, comprising a transmitter (300) and a receiver (302),
**characterised by** the transmitter (300) comprising a first coil (310) inductively coupled to a second coil (314); and a first conversion module (306) arranged to receive a logical DALI signal, said first conversion module comprising a first amplifier (307) arranged to amplify the logical DALI signal so as to generate a drive current for the first coil (310) to generate an induction signal in the second coil (314); the receiver (302) comprising the second coil (314) inductively coupled to the first coil (310) arranged to receive the induction signal; a second conversion module (318) coupled to the second coil (314) arranged to convert the received induction signal into a reconstructed logical DALI signal, which second conversion module (318) comprises a bit reconstruction module (309) arranged to convert the induction signal into the reconstructed logical DALI signal.

2. The system of claim 1 wherein the receiver is coupled to DALI hardware (322) for processing DALI signals and wherein the receiver is configured to drive the DALI hardware (322) using the reconstructed logical DALI signal.

3. The system of claim 2 wherein the second conversion module (400) further comprises a noise filtering module (402) configured to filter noise from the induction signal and transmit a filtered signal to the bit reconstruction module (401).

4. The system of claim 3 wherein the second conversion module (400) further comprises a second amplifier (404) configured to amplify the induction signal and transmit an amplified induction signal to the noise filtering module (402).

5. The system of claim 4 wherein the transmitter is configured to transmit a logical DALI signal a plurality of times.

6. The system of anyone of claims 3-5 wherein the noise filtering module (402) comprises a band pass filter.

7. The system of anyone of claims 3-5 wherein the noise filtering module (402) comprises a low-pass filter.

8. The system of anyone claims 1-7 wherein the bit reconstruction module (401) is configured to use a voltage threshold value to determine a bit sequence of the reconstructed DALI signal from a received signal.

9. The system of claim 8 wherein the bit reconstruction module (401) is configured to detect rising and falling edges in the received signal and to use these edges to determine a bit length and wherein the bit reconstruction module is configured to implement corrections to obtain correct and equal bit-lengths.

10. The system of anyone of claims claim 1-9 wherein the receiver (302) is placed in a luminaire comprising a light generation module, a driver for controlling the light generation module and a power supply for powering the light generation module, the driver and the receiver, wherein the receiver (302) is configured to send the reconstructed logical DALI signal to the driver, and wherein the driver is configured to control the light generation module based on the reconstructed logical DALI signal sent by the receiver and wherein the transmitter is placed in an add-on module inductively coupled to the luminaire for powering the transmitter.

11. A transmitter (300) comprising:
- a first coil (310) arranged to be inductively coupled to a second coil (314); and
- a first conversion module (306) arranged to receive a logical DALI signal, said first conversion module comprising a first amplifier (307) arranged to amplify the logical DALI signal so as to generate a drive current for the first coil (310) to generate an induction signal in the second coil.

12. The transmitter of claim 11 wherein the transmitter (300) is configured to transmit a logical DALI signal a plurality of times.

13. A receiver (302) comprising:
- a second coil (314) arranged to be inductively coupled to a first coil that is arranged to transmit a logical Digital Addressable Lighting Interface (DALI) signal by generating an induction signal in the second coil (314);
- a second conversion module (318) coupled to the second coil arranged to convert the received induction signal into a reconstructed logical DALI signal, which second conversion module comprises a bit reconstruction module (309) arranged to convert the induction signal into the reconstructed logical DALI signal.

14. The receiver of claim 13 wherein the second conversion module (400) further comprises a noise filtering module (402) configured to filter noise from the induction signal and transmit a filtered signal to the bit reconstruction module (401).

15. The receiver of claim 14 wherein the second conversion module (400) further comprises a second amplifier (404) configured to amplify the induction signal and transmit an amplified induction signal to the noise filtering module (402).

## Patentansprüche

1. System zur drahtlosen Übertragung eines logischen Digital Addressable Lighting Interface (DALI-) Signals mit einem Sender (300) und einem Empfänger (302), **dadurch gekennzeichnet, dass** der Sender (300) eine mit einer zweiten Spule (314) induktiv gekoppelte erste Spule (310) umfasst; und ein erstes Konvertierungsmodul (306) so eingerichtet ist, dass es ein logisches DALI-Signal empfängt, wobei das erste Konvertierungsmodul einen ersten Verstärker (307) umfasst, der so eingerichtet ist, dass er das logische DALI-Signal so verstärkt, dass ein Antriebsstrom für die erste Spule (310) erzeugt wird, um ein Induktionssignal in der zweiten Spule (314) zu erzeugen; der Empfänger (302), der die mit der ersten Spule (310) induktiv gekoppelte zweite Spule (314) umfasst, so eingerichtet ist, dass er das Induktionssignal empfängt; ein mit der zweiten Spule (314) gekoppeltes, zweites Konvertierungsmodul (318) so eingerichtet ist, dass es das empfangene Induktionssignal in ein rekonstruiertes, logisches DALI-Signal konvertiert, wobei das zweite Konvertierungsmodul (318) ein Bit-Rekonstruktionsmodul (309) umfasst, das so eingerichtet ist, dass es das Induktionssignal in das rekonstruierte, logische DALIO-Signal konvertiert.

2. System nach Anspruch 1, wobei der Empfänger zur Verarbeitung von DALI-Signalen mit DALI-Hardware (322) gekoppelt ist, und wobei der Empfänger so konfiguriert ist, dass er die DALI-Hardware (322) unter Verwendung des rekonstruierten, logischen DALI-Signals ansteuert.

3. System nach Anspruch 2, wobei das zweite Konvertierungsmodul (400) weiterhin ein Rauschfiltermodul (402) umfasst, das so konfiguriert ist, dass es Rauschen aus dem Induktionssignal filtert und ein gefiltertes Signal zu dem Bit-Rekonstruktionsmodul (401) überträgt.

4. System nach Anspruch 3, wobei das zweite Konvertierungsmodul (400) weiterhin einen zweiten Verstärker (404) umfasst, der so konfiguriert ist, dass er das Induktionssignal verstärkt und ein verstärktes Induktionssignal zu dem Rauschfiltermodul (402) überträgt.

5. System nach Anspruch 4, wobei der Sender so konfiguriert ist, dass er mehrere Male ein logisches DALI-Signal überträgt.

6. System nach den Ansprüchen 3-5, wobei das Rauschfiltermodul (402) ein Bandpassfilter umfasst.

7. System nach den Ansprüchen 3-5, wobei das Rauschfiltermodul (402) ein Tiefpassfilter umfasst.

8. System nach einem der Ansprüche 1-7, wobei das Bit-Rekonstruktionsmodul (401) so konfiguriert ist, dass es einen Spannungsschwellwert verwendet, um eine Bitsequenz des aus einem empfangenen Signal rekonstruierten DALI-Signals zu ermitteln.

9. System nach Anspruch 8, wobei das Bit-Rekonstruktionsmodul (401) so konfiguriert ist, dass es ansteigende und abfallende Flanken in dem empfangenen Signal detektiert und diese Flanken zum Ermitteln einer Bitlänge einsetzt, und wobei das Bit-Rekonstruktionsmodul so konfiguriert ist, dass es Korrekturen durchführt, um korrekte und gleiche Bitlängen zu erhalten.

10. System nach einem der Ansprüche 1-9, wobei der Empfänger (302) in einer Leuchte platziert ist, die ein Lichterzeugungsmodul, einen Treiber zur Steuerung des Lichterzeugungsmoduls sowie eine Stromversorgung zur Speisung des Lichterzeugungsmoduls, des Treibers und des Empfängers umfasst, wobei der Empfänger (302) so konfiguriert ist, dass er dem Treiber das rekonstruierte, logische DALI-Signal übermittelt, und wobei der Treiber so konfiguriert ist, dass er das Lichterzeugungsmodul aufgrund des von dem Empfänger übermittelten, rekonstruierten, logischen DALI-Signals steuert, und wobei der Sender zur Energieversorgung desselben in einem mit der Leuchte induktiv gekoppelten Zusatzmodul platziert ist.

11. Sender (300), umfassend:
- eine erste Spule (310), die mit einer zweiten Spule (314) induktiv gekoppelt ist; sowie
- ein erstes Konvertierungsmodul (306), das so angeordnet ist, dass es ein logisches DALI-Signal empfängt, wobei das erste Konvertierungsmodul einen ersten Verstärker (307) umfasst, der so eingerichtet ist, dass er das logische DALI-Signal so verstärkt, dass ein Antriebsstrom für die erste Spule (310) erzeugt wird, um ein Induktionssignal in der zweiten Spule zu erzeugen.

12. Sender nach Anspruch 11, wobei der Sender (300) so konfiguriert ist, dass er mehrere Male ein logisches DALI-Signal überträgt.

13. Empfänger (302), umfassend:
- eine mit einer ersten Spule induktiv gekoppelte zweite Spule (314), die so eingerichtet ist, dass sie durch Erzeugen eines Induktionssignals in der zweiten Spule (314) ein logisches Digital Addressable Lighting Interface (DALI-) Signal überträgt;
- ein mit der zweiten Spule gekoppeltes zweites Konvertierungsmodul (318), das so eingerichtet ist, dass es das empfangene Induktionssignal in ein rekonstruiertes, logisches DALI-Signal konvertiert, wobei das zweite Konvertierungsmodul ein Bit-Rekonstruktionsmodul (309) umfasst, das so eingerichtet ist, dass es das Induktionssignal in das rekonstruierte, logische DALI-Signal konvertiert.

14. Empfänger nach Anspruch 13, wobei das zweite Konvertierungsmodul (400) weiterhin ein Rauschfiltermodul (402) umfasst, das so konfiguriert ist, dass es Rauschen aus dem Induktionssignal filtert und ein gefiltertes Signal zu dem Bit-Rekonstruktionsmodul (401) überträgt.

15. Empfänger nach Anspruch 14, wobei das zweite Konvertierungsmodul (400) weiterhin einen zweiten Verstärker (404) umfasst, der so konfiguriert ist, dass er das Induktionssignal verstärkt und ein verstärktes Induktionssignal zu dem Rauschfiltermodul (402) überträgt.

## Revendications

1. Système pour la transmission sans fil d'un signal d'interface numérique d'éclairage adressable (DALI, de l'anglais Digital Addressable Lighting Interface), comprenant un émetteur (300) et un récepteur (302),
**caractérisé en ce que** l'émetteur (300) comprend une première bobine (310) couplée par induction à une seconde bobine (314); et un premier module de conversion (306) conçu pour recevoir un signal logique DALI, ledit premier module de conversion comprenant un premier amplificateur (307) conçu pour amplifier le signal logique DALI de manière à générer un courant d'entraînement afin que la première bobine (310) génère un signal d'induction dans la seconde bobine (314) ; le récepteur (302) comprenant la seconde bobine (314) couplée par induction à la première bobine (310) et conçue pour recevoir le signal d'induction ; un second module de conversion (318) couplé à la seconde bobine (314) et conçu pour convertir le signal d'induction reçu en un signal logique DALI reconstruit, ledit second module de conversion (318) comprenant un module de reconstruction de bits (309) conçu pour convertir le signal d'induction en le signal logique DALI reconstruit.

2. Système selon la revendication 1 dans lequel le récepteur est couplé à un matériel DALI (322) de traitement de signaux DALI et dans lequel le récepteur est configuré pour entraîner le matériel DALI (322) au moyen du signal logique DALI reconstruit.

3. Système selon la revendication 2 dans lequel le second module de conversion (400) comprend en outre un module de filtrage de bruit (402) configuré pour filtrer le bruit émanant du signal d'induction et transmettre un signal filtré au module de reconstruction de bits (401).

4. Système selon la revendication 3 dans lequel le second module de conversion (400) comprend en outre un second amplificateur (404) configuré pour amplifier le signal d'induction et transmettre un signal d'induction amplifié au module de filtrage de bruit (402).

5. Système selon la revendication 4 dans lequel l'émetteur est configuré pour émettre un signal logique DALI une pluralité de fois.

6. Système selon l'une quelconque des revendications 3 à 5 dans lequel le module de filtrage de bruit (402) comprend un filtre passe-bande.

7. Système selon l'une quelconque des revendications 3 à 5 dans lequel le module de filtrage de bruit (402) comprend un filtre passe-bas.

8. Système selon l'une quelconque des revendications 1 à 7 dans lequel le module de reconstruction de bits (401) est configuré pour utiliser une valeur seuil de tension pour déterminer une séquence de bits du signal DALI reconstruit à partir d'un signal reçu.

9. Système selon la revendication 8 dans lequel le module de reconstruction de bits (401) est configuré pour détecter les fronts montants et descendants du signal reçu et pour utiliser ces fronts pour déterminer une longueur de bits et dans lequel le module de reconstruction de bits est configuré pour mettre en oeuvre des corrections afin d'obtenir des longueurs de bits correctes et égales.

10. Système selon l'une quelconque des revendications 1 à 9 dans lequel le récepteur (302) est placé dans un luminaire comprenant un module de génération de lumière, un circuit d'entraînement pour commander le module de génération de lumière et une alimentation pour alimenter le module de génération de lumière, le circuit d'entraînement et le récepteur, dans lequel le récepteur (302) est configuré pour envoyer le signal logique DALI reconstruit au circuit d'entraînement, et dans lequel le circuit d'entraînement est configuré pour commander le module de génération de lumière sur la base du signal logique DALI reconstruit envoyé par le récepteur et dans lequel l'émetteur est placé dans un module complémentaire couplé par induction au luminaire pour alimenter l'émetteur.

11. Emetteur (300) comprenant :
- une première bobine (310) conçue pour être couplée par induction à une seconde bobine (314) ; et
- un premier module de conversion (306) conçu pour recevoir un signal logique DALI, ledit premier module de conversion comprenant un premier amplificateur (307) conçu pour amplifier le signal logique DALI de manière à générer un courant d'entraînement afin que la première bobine (310) génère un signal d'induction dans la seconde bobine.

12. Emetteur selon la revendication 11 dans lequel l'émetteur (300) est configuré pour émettre un signal logique DALI une pluralité de fois.

13. Récepteur (302) comprenant :
- une seconde bobine (314) conçue pour être couplée par induction à une première bobine qui est conçue pour émettre un signal d'interface numérique d'éclairage adressable (DALI) en générant un signal d'induction dans la seconde bobine (314) ;
- un second module de conversion (318) couplé à la seconde bobine et conçu pour convertir le signal d'induction reçu en un signal logique DALI reconstruit, ledit second module de conversion comprenant un module de reconstruction de bits (309) conçu pour convertir le signal d'induction en le signal logique DALI reconstruit.

14. Récepteur selon la revendication 13 dans lequel le second module de conversion (400) comprend en outre un module de filtrage de bruit (402) configuré pour filtrer le bruit émanant du signal d'induction et transmettre un signal filtré au module de reconstruction de bits (401).

15. Récepteur selon la revendication 14 dans lequel le second module de conversion (400) comprend en outre un second amplificateur (404) configuré pour amplifier le signal d'induction et transmettre un signal d'induction amplifié au module de filtrage de bruit (402).
